# EUROPÄISCHE PATENTSCHRIFT

(11) **EP 2 994 295 B1**
(45) Veröffentlichungstag und Bekanntmachung des Hinweises auf die Patenterteilung: **15.09.2021**
(21) Anmeldenummer: 14716352.1
(22) Anmeldetag: 10.04.2014
(51) Int. Cl.: B29C 70/14

(54) **WÄRMELEITFÄHIGE KUNSTSTOFFBAUTEILE MIT ERHÖHTER WÄRMELEITUNG IN DICKENRICHTUNG**
THERMALLY CONDUCTIVE PLASTICS COMPONENTS HAVING INCREASED THERMAL CONDUCTION IN THE DIRECTION OF THICKNESS
ÉLÉMENTS EN MATIÈRE PLASTIQUE THERMO-CONDUCTEURS PRÉSENTANT UNE CONDUCTION THERMIQUE ACCRUE DANS LE SENS DE L'ÉPAISSEUR

(30) Priorität: 10.05.2013 DE 102013208605
(43) Veröffentlichungstag der Anmeldung: 16.03.2016
(73) Patentinhaber: Robert Bosch GmbH, 70442 Stuttgart (DE)
(72) Erfinder: RAISCH, Sven Robert, 70565 Stuttgart (DE); SCHMIEDERER, Dirk, 70806 Kornwestheim (DE); BADER, Maximilian, 70191 Stuttgart (DE)
(86) Internationale Anmeldenummer: PCT/EP2014/057284
(87) Internationale Veröffentlichungsnummer: WO 2014/180625

(56) Entgegenhaltungen:
- DE-U1-202007 003 905
- US-A1- 2002 182 473
- None

## Beschreibung

### Stand der Technik

Die vorliegende Erfindung betrifft das technische Gebiet der wärmeleitfähigen Kunststoffe.

Während Kunststoffe gegenüber metallischen Werkstoffen ein hohes Fertigungspotenzial und große Gestaltungsfreiheiten durch Spritzgieß- und Extrusionsverfahren aufweisen, liegt ihre Wärmeleitfähigkeit im Allgemeinen mit Werten von λ = 0,1 bis 0,5 W/(m . K) deutlich niedriger. Eine Erhöhung der Wärmeleitfähigkeit wird üblicherweise durch eine Einarbeitung von geeigneten Füllstoffen in das Polymer erreicht.

Zum Zweck der Temperierung von beispielsweise elektronischen Komponenten weist der Einsatz von Bauteilen aus solchen wärmeleitfähigen, beispielsweise elektrisch isolierenden Kunststoffen als Ersatz metallischer Bauteile mehrere Vorteile auf. Diese Bauteile werden im Stand der Technik beispielsweise im Spritzgussverfahren hergestellt. Meistens werden sie auch werkzeugfallend ohne eine nachgeschaltete Nachbearbeitung ihrem Verwendungszweck zugeführt.

Der Verwendungszweck solcher Bauteile ist meistens, darauf aufgebrachte elektronische Komponenten durch Abfuhr der Betriebswärme zu temperieren. Hierbei ist es notwendig, dass sich ein möglichst durchgehender Wärmeleitpfad in Bauteildurchgangsrichtung (nachfolgend Plattendurchgangsrichtung oder Dickenrichtung genannt) ausbildet. Dieser Wärmeleitpfad prägt sich in wärmeleitfähigen und elektrisch isolierenden Kunststoffen über die Anordnung und Zusammensetzung des Kunststoffs, also der Füllstoffe in der Polymermatrix, fertigungs- und geometriebedingt unterschiedlich aus.

Weiterhin ist aus der US 2002182473 eine Separatorplatte aus einem Kompositmaterial bekannt, wobei das Kompositmaterial ein Polymermaterial und räumlich orientierte Füllstoffpartikel umfasst.

### Offenbarung der Erfindung

Durch die vorliegende Erfindung wird folgendes bereit gestellt: Ein Verfahren gemäß Anspruch 1 zur Herstellung von plattenförmigen Kunststoffformteilen mit erhöhter Wärmeleitfähigkeit.

Dadurch kann eine besonders vorteilhafte Füllstofforientierung erreicht werden, d.h. die Ausrichtung der Füllstoffe mit meist plättchenförmiger Geometrie während des Spritzgießprozesses. Die zur Erhöhung der Wärmeleitfähigkeit eingesetzten Füllstoffe orientieren sich während des Spritzgießprozesses durch das Füllbild, den Quellfluss und den Schergradienten in der Plattenebene. Es kann darüber hinaus eine füllstoffarme Randschicht vermieden werden, die sonst eine unerwünschte Verringerung der Wärmeleitfähigkeit des Bauteils insgesamt bewirkt. Durch das erfindungsgemäße Verfahren kann weiterhin überwiegend eine fertigungsbedingte Füllstofforientierung in Flussrichtung bzw. parallel zur Flussrichtung vermindert werden, die ansonsten zu einer hohen Anisotropie der Wärmeleitfähigkeit des gesamten Bauteiles insbesondere in der beabsichtigten Wärmedurchgangsrichtung führt.

Dadurch wird ein Verfahren zur Herstellung von Formteilen aus durch den Einsatz von entsprechenden Füllstoffen wärmeleitfähig gemachten Kunststoffen erhalten, durch das zum einen die füllstoffarme Randschicht zumindest verkleinert und zum anderen die Wärmeleitfähigkeit senkrecht zur Plattenebene verbessert werden kann.

Unter einem Spritzgussverfahren wird im Rahmen der vorliegenden Erfindung ein Spritzgussverfahren für Kunststoffe verstanden, wie es dem Fachmann allgemein aus dem Stand der Technik bekannt ist. Dazu wird mit einer Spritzgießmaschine der Kunststoff in einer Spritzeinheit plastifiziert und in ein Spritzgießwerkzeug eingespritzt. Die Kavität des Spritzgießwerkzeugs bestimmt die Form und die Oberflächenstruktur des auf diese Weise hergestellten Formteils. Mit dem Spritzgießen lassen sich so sowohl Formkörper mit großer Genauigkeit aber auch in großer Zahl innerhalb kurzer Zeit herstellen.

Im vorliegenden Verfahren wird ein Kunststoff plastifiziert und gespritzt, der ein Polymer und mindestens einen wärmeleitenden Füllstoff umfasst. Dabei werden während des Spritzvorgangs die wärmeleitfähigen, insbesondere plättchenförmigen oder faserförmigen Füllstoffteilchen durch die Oberflächengeometrie lokal senkrecht zur

Formteilebene orientiert. Der Begriff der Formteilebene wird am besten anhand des plattenförmigen Formteils verdeutlicht: Die Formteilebene ist identisch mit der Plattenebene oder verläuft parallel zu ihr. Durch das erfindungsgemäße Verfahren werden die insbesondere plättchen- oder faserförmigen Füllstoffteilchen überwiegend lokal senkrecht zur Formteilebene ausgerichtet. Das bedeutet, dass die Ebene der Füllstoffteilchen senkrecht zur Formteilebene ausgerichtet ist.

In einer bevorzugten Ausführungsform der vorliegenden Erfindung beträgt der Anteil der plättchenförmigen Füllstoffteilchen, die lokal senkrecht zur Plattenebene orientiert sind, mindestens 10 %, bevorzugt mindestens 50 %, besonders bevorzugt mindestens 75 % an der Gesamtmenge der Füllstoffteilchen.

Durch diese lokale Orientierung der wärmeleitfähigen Füllstoffteilchen lokal senkrecht zur Plattenebene wird eine im Vergleich zu einem standardmäßig und mit der gleichen Prozessführung, aber ohne die lokale Orientierung der wärmeleitfähigen Füllstoffteilchen hergestellten Formteil eine erhöhte Wärmeleitfähigkeit quer zur Plattenebene in Dickenrichtung erreicht.

Zur gezielten Orientierung der wärmeleitfähigen Füllstoffpartikel in Dickenrichtung eines plattenförmigen Kunststoffformteils kommen je nach Anforderung an die Fläche, welche die erhöhte Orientierung aufweisen soll, verschiedene Funktionselemente bzw. Funktionsgeometrien der Oberfläche des Spritzgießwerkzeugs in Frage. Es hat sich herausgestellt, dass insbesondere durch Aufbringen von Pins, Rippen oder eine Sägezahngeometrie auf die Oberfläche der Kavität des Spritzgießwerkszeugs sich eine besonders günstige Orientierung der Füllstoffpartikel erreichen lassen kann. Daher umfasst in einer bevorzugten Ausführungsform des erfindungsgemäßen Verfahrens die Kavität des Spritzgießwerkzeugs Pins, Rippen und/oder eine Sägezahngeometrie. Dabei sind diese Funktionselemente bevorzugt partiell oder vollflächig auf mindestens einer Seite der Kavität des Spritzgießwerkzeugs aufgebracht. In einer weiteren bevorzugten Ausgestaltung dieser Ausführungsform der vorliegenden Erfindung sind die Funktionselemente vollflächig auf einer Seite der Kavität aufgebracht, in einer anderen bevorzugten Ausgestaltung sind die Funktionselemente vollflächig auf beiden Seiten der Kavität des Spritzgießwerkzeugs aufgebracht.

Durch das Entfernen mindestens eines Teiles der Oberfläche des Formteils wird darüber hinaus mindestens ein Teil der füllstoffarmen Randschicht entfernt, was zu einer weiteren vorteilhaften Steigerung der Wärmeleitfähigkeit des Formteils führt. Daher umfasst das Verfahren gemäß der vorliegenden Erfindung in einer erfindungsgemäßen Ausführungsform einen Schritt b) Entfernen mindestens eines Teiles der Oberfläche durch mechanische Bearbeitung. Durch diese mechanische Nachbearbeitung des Formteils entsprechend Schritt b) des erfindungsgemäßen Verfahrens im Bereich der Funktionselemente und den dadurch bedingten teilweise oder vollständigen Abtrag dieser Elemente, kann ein zu temperierendes elektronisches Bauteil wie beispielsweise eine Lithium-Ionen-Batteriezelle und/oder ein Temperiermedium direkt mit der resultierenden füllstoffreichen Oberfläche mit optimierter Füllstoffausrichtung in Plattendicke in Kontakt gebracht werden. Diese bewirkt eine vorteilhafte Verminderung des Wärmewiderstands. Es ist besonders vorteilhaft, wenn auf beiden Seiten des plattenförmigen Formteils die Oberfläche entfernt wird. In welcher Dicke die Oberfläche des Formteils und damit die füllstoffarme Randschicht entfernt wird, hängt insbesondere von der Form des Formteils sowie von der Dicke und der Ausprägung der füllstoffarmen Randschicht ab. Besonders effizient und kontrolliert hinsichtlich Fläche und Tiefe der zu entfernenden Fläche wird das mechanische Entfernen entsprechend Schritt b) des erfindungsgemäßen Verfahrens mittels Schleifen, Fräsen, und/oder Drehen durchgeführt. In einer bevorzugten Ausgestaltung der Ausführungsform des Schrittes b) wird die mechanische Entfernung mindestens eines Teiles der Oberfläche des Formteils, die im Wesentlichen der füllstoffarmen Randschicht entspricht, somit mittels Schleifen, Fräsen, und/oder Drehen durchgeführt.

Die mechanische Nachbearbeitung des Schrittes b), bevorzugt durch Schleifen, Fräsen, und/oder Drehen ermöglicht darüber hinaus, fertigungsbedingte Unebenheiten auszugleichen und die Maßgenauigkeit der Formteiloberfläche zu erhöhen. Dieses ist insbesondere bei der Anpassung eines als Kühler oder eines Teil eines als Kühler dienenden Bauteils an die Kontur der zu temperierenden Bauteile vorteilhaft.

Ungeachtet dessen können auch ohne die der in Schritt b) nachgeschalteten mechanischen Bearbeitung entfernten Funktionselemente bzw. deren Abdrücke auf dem Formteil eingesetzt werden, was neben der Erhöhung der Wärmeleitfähigkeit in Dickenrichtung eine Verbesserung des Wärmeübertrags durch eine Erhöhung der Oberfläche bewirken kann.

Als Kunststoffe im Sinne der vorliegenden Erfindung sind generell die im Stand der Technik bekannten Kunststoffe und Polymere anzusehen, die mittels eines Spritzgieß- und/oder Extrusionsverfahrens formbar sind und die sich nicht durch Wärmeeinwirkung unterhalb der Wärmeformbeständigkeitstemperatur verformen. In einer bevorzugten Ausführungsform der vorliegenden Erfindung ist der Kunststoff bzw. das Polymer ausgewählt aus den Gruppen der Thermoplaste, Elastomere und Duroplaste. Besonders geeignet sind Polypropylen, Polyethylen, Polyurethan, Polystyrol, Liquid Crystal Polymer, Polycarbonat, Polyester, Polyphenylensulfid, Polyetheretherketon, Polyamid, BMC und Epoxidharz.

Als Füllstoffe werden im Rahmen der vorliegenden Erfindung Stoffe, Verbindungen und Mineralien eingesetzt, die selber eine gute Wärmeleitfähigkeit aufweisen und dem Kunststoff der sie umgebenden Polymermatrix eine höhere Wärmeleitfähigkeit verleihen zu in der Lage sind.

Es kann für den Einsatz der Kunststoffformteile beispielsweise als Kühler oder Gehäuse von elektronischen Bauteilen und dergleichen notwendig sein, dass sie eine erhöhte Wärmeleitfähigkeit aufweisen, ansonsten aber als elektrische Isolatoren wirken. In diesem Fall werden gemäß der Erfindung elektrisch nichtleitende Verbindungen als wärmeleitende Füllstoffe eingesetzt. Diese sind aus der Gruppe bestehend aus Talkum, Kreide, Glasfasern, Bornitrid, Aluminiumnitrid, Aluminiumoxid, Magnetit, Magnesiumoxid, Magnesiumhydroxid, Aluminiumhydroxid, Kaolin, Feldspat, Alumosilikaten, Wollastonit, Cristobalit und Berylliumoxid ausgewählt. Besonders vorteilhaft und daher bevorzugt ist die Verwendung von Bornitrid.

Ein gemäß dem Verfahren der vorliegenden Erfindung hergestelltes Kunstoffformteil weist daher eine verbesserte Wärmeleitfähigkeit auf und kann so besonders vorteilhaft als Kühler, Gehäuse für elektronische Bauteile eingesetzt werden. Daher ist ein weiterer Gegenstand der vorliegenden Erfindung ein plattenförmiges Kunststoffformteil gemäß Anspruch 6. Dabei sind die Polymere, Füllstoffe und Definitionen dieselben wie für das erfindungsgemäße Verfahren dargelegt.

In einer bevorzugten Ausführungsform der vorliegenden Erfindung beträgt der Anteil der plättchenförmigen Füllstoffteilchen, die lokal senkrecht zur Plattenebene orientiert sind, mindestens 10 %, bevorzugt mindestens 50 %, besonders bevorzugt mindestens 75 % an der Gesamtmenge der Füllstoffteilchen.

Aufgrund der vorteilhaften Eigenschaften hinsichtlich der Wärmeleitfähigkeit senkrecht zur Plattendicke bzw. zur Formteilebene, in Verbindung mit der Eigenschaft als elektrischer Isolator, ist das plattenförmiges Kunstoffformteil gemäß der vorliegenden Erfindung in einer bevorzugten Ausführungsform ein Gehäuse oder ein Kühlkörper.

### Beschreibung der Figuren

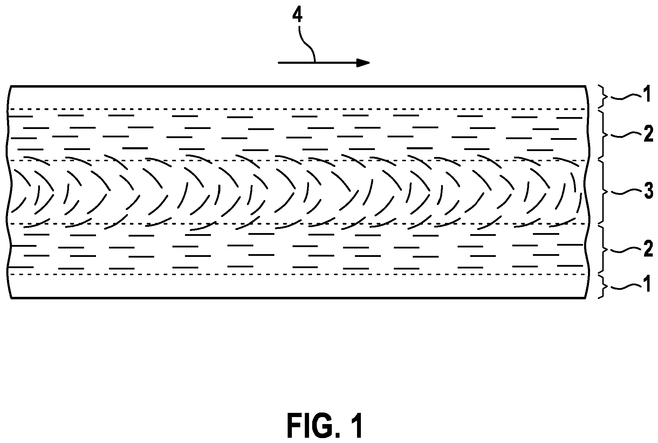

Figur 1 zeigt eine prinzipielle Füllstoffanordnung anhand eines Längsschnittes einer plattenförmigen Bauteilgeometrie gemäß dem Stand der Technik. Zu sehen ist die Randschicht (1), die füllstoffarm oder sogar füllstofffrei ist. Darunter sind die in Fließrichtung (4) bei der Herstellung des Bauteils orientierten plättchenförmigen Füllstoffe zu sehen. Die Fließrichtung (4) ist generell identisch mit der Plattenebene. Dadurch wird eine Zone (2) gebildet, in der in der Längs- und Breitenrichtung der Platte eine gute Wärmeleitfähigkeit vorliegt. In der Mitte der Platte befindet Zone (3), in der die Füllstoffe im Wesentlichen senkrecht zur Fließrichtung (4) orientiert sind. Dabei ist die Fließrichtung (4) identisch mit der Formteilebene. Die Dickenrichtung ist senkrecht zur Formteilebene und der Fließrichtung (4). Da die Füllstoffe in Zone (3) überwiegend senkrecht zur Formteilebene (4) und überwiegend parallel zur Dickenrichtung des plattenförmigen Bauteils ausgerichtet sind, ist die Platte in der Bauteilmitte (der Zone (3)) in Dickenrichtung gut wärmeleitend.

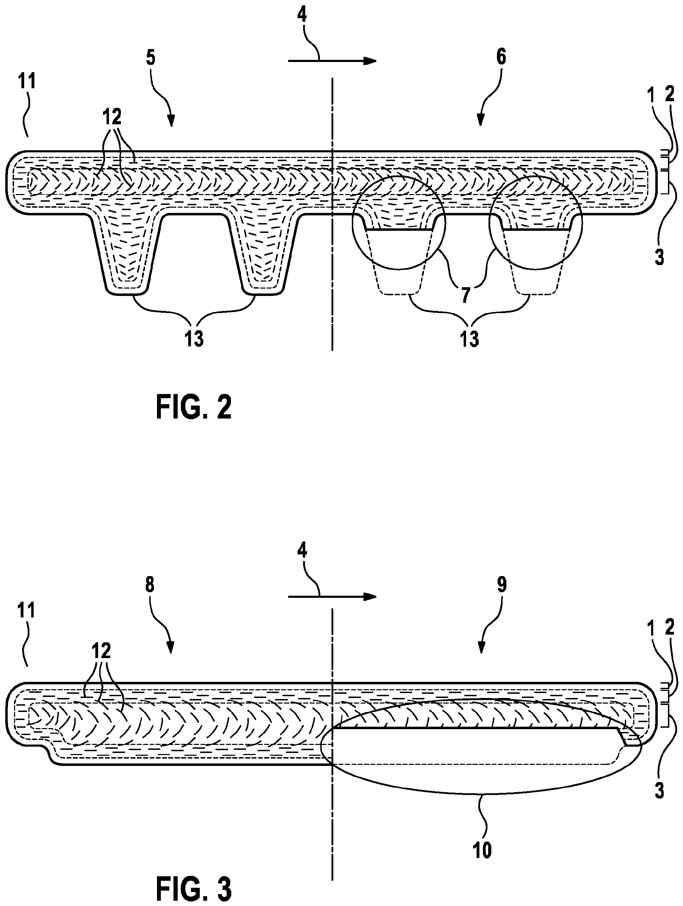

Figur 2 stellt einen Querschnitt durch ein plattenförmiges Kunststoffformteil (11) dar, wie es durch das erfindungsgemäße Verfahren erhalten wird. Links ist die unbearbeitete Platte (5) dargestellt, an deren unterem Ende noch die Abformungen (13) der Funktionselemente des Spritzgießwerkzeugs zu sehen sind. Rechts ist die mechanisch bearbeitete Platte (6) abgebildet, in der die Spitzen der Abformungen (13) mechanisch entfernt worden sind. Auf diese Weise sind Bereiche (7) mit einer verbesserten Wärmeleitung durch eine bessere Füllstofforientierung an der Oberfläche entstanden. Insgesamt ist dabei durch das erfindungsgemäße Verfahren, insbesondere durch den Einsatz der Funktionselemente des Spritzgießwerkzeugs, eine Verbreiterung der Zone (3) entstanden, in denen die Füllstoffe (12) im Wesentlichen senkrecht zur Fließrichtung (4) orientiert sind. Dabei versteht sich insbesondere, dass die Fließrichtung (4) parallel oder gleich ist mit der Plattenebene bzw. Formteilebene im Sinne der vorliegenden Erfindung. Dieses gilt nicht nur für die in Figur 2 gezeigte Ausführungsform, sondern generell in der vorliegenden Erfindung.
Figur 3 zeigt einen Querschnitt durch ein plattenförmiges Kunststoffformteil (11) gemäß der vorliegenden Erfindung. Hier ist links im Bild die unbehandelte Platte (8) mit der unvorteilhaften Füllstoffverteilung am oberen und unteren Rand der Platte zu sehen. Rechts im Bild ist die mechanisch bearbeitete Platte (9) gezeigt, in der durch eine mechanische Bearbeitung wie beispielsweise Schleifen, Fräsen und/oder Drehen die füllstoffarme Randschicht (1) und die Schicht (2), in der die plättchenförmigen Füllstoffe (12) im Wesentlichen parallel zur Plattenebene ausgerichtet sind, entfernt wurden. Auf diese Weise wurden so Bereiche (10) mit verbesserter Wärmeleitung durch bessere Füllstofforientierung an der Oberfläche der Platte (11) erhalten.

## Patentansprüche

1. Verfahren zur Herstellung von plattenförmigen Kunststoffformteilen (11) mit erhöhter Wärmeleitfähigkeit, umfassend
b) Formen eines Formteils (11) durch Spritzgießen einer Mischung aus einem Polymer und wärmeleitfähigen Füllstoffteilchen (12);
wobei während des Formens durch Spritzgießen durch die Oberflächengeometrie des Spritzgießwerkzeugs die wärmeleitfähigen Füllstoffteilchen lokal senkrecht zu einer zu einer Fließrichtung (4) der Mischung aus einem Polymer und wärmeleitfähigen Füllstoffteilchen parallelen Plattenebene orientiert werden, wobei die Oberflächengeometrie des Spritzgießwerkzeugs Funktionselemente umfasst
und wobei das Verfahren einen weiteren Schritt
b) Entfernen mindestens eines Teiles der Oberfläche des Formteils durch mechanische Bearbeitung umfasst, wobei die Füllstoffteilchen aus einer elektrischen nichtleitenden Verbindung besteht, ausgewählt aus der Gruppe bestehend aus Talk, Glasfasern, Bornitrid, Aluminiumnitrid, Aluminiumoxid, Magnetit, Kaolinit, Feldspat, Alumosilikaten und Berylliumoxid.

2. Verfahren gemäß Anspruch 1, wobei die Funktionselemente partiell oder vollflächig auf mindestens einer Seite des Spritzgießwerkzeugs aufgebracht sind.

3. Verfahren gemäß Anspruch 1, wobei das Entfernen mindestens eines Teiles der Oberfläche durch Schleifen, Fräsen und/oder Drehen erfolgt.

4. Verfahren gemäß mindestens einem der vorhergehenden Ansprüche, wobei der Anteil der plättchenförmigen Füllstoffteilchen (12), die lokal senkrecht zur Plattenebene orientiert sind, mindestens 10 %, bevorzugt mindestens 50 %, besonders bevorzugt mindestens 75 % an der Gesamtmenge der Füllstoffteilchen (12) beträgt.

5. Verfahren gemäß mindestens einem der vorhergehenden Ansprüche, wobei das Polymer ausgewählt ist aus der Gruppe bestehend aus Polypropylen, Polyethylen, Polyurethan, Polycarbonat, Polyester, Polyphenylensulfid, Polyetheretherketon, und Polyamid.

6. Plattenförmiges Kunststoffformteil (11), erhalten durch ein Verfahren nach Anspruch 1, umfassend ein Polymer und wärmeleitfähige Füllstoffteilchen (12), wobei die wärmeleitfähigen, insbesondere plättchenförmigen oder faserförmigen Füllstoffteilchen lokal senkrecht zu einer zu einer Fließrichtung (4) der Mischung aus einem Polymer und wärmeleitfähigen Füllstoffteilchen parallelen Plattenebene orientiert sind, und wobei die Füllstoffteilchen aus einer elektrischen nichtleitenden Verbindung besteht, ausgewählt aus der Gruppe bestehend aus Talk, Glasfasern, Bornitrid, Aluminiumnitrid, Aluminiumoxid, Magnetit, Kaolinit, Feldspat, Alumosilikaten und Berylliumoxid.

7. Kunststoffformteil (11) gemäß Anspruch 6, wobei der Anteil der plättchenförmigen Füllstoffteilchen (12), die lokal senkrecht zur Plattenebene orientiert sind, mindestens 10 %, bevorzugt mindestens 50 %, besonders bevorzugt mindestens 75 % an der Gesamtmenge der Füllstoffteilchen (12) beträgt.

8. Kunstoffformteil (11) gemäß einem der Ansprüche 6 und 7, wobei das plattenförmige Formteil (119 ein Gehäuse oder ein Kühlkörper ist.

## Claims

1. Method for producing plate-shaped moulded plastics parts (11) with increased thermal conductivity, comprising the step of
b) moulding a moulded part (11) by injection moulding a mixture composed of a polymer and thermally conductive filler particles (12);
wherein, during the moulding by injection moulding, by virtue of the surface geometry of the injection moulding tool the thermally conductive filler particles are locally oriented perpendicularly to a plate plane which is parallel to a direction of flow (4) of the mixture composed of a polymer and thermally conductive filler particles, wherein the surface geometry of the injection moulding tool comprises functional elements,
and wherein the method comprises a further step of
b) removing at least part of the surface of the moulded part by machining, wherein the filler particles are composed of an electrically non-conductive compound selected from the group consisting of talc, glass fibres, boron nitride, aluminium nitride, aluminium oxide, magnetite, kaolinite, feldspar, aluminosilicates and beryllium oxide.

2. Method according to Claim 1, wherein the functional elements are applied to at least one side of the injection moulding tool partially or over the entire surface area.

3. Method according to Claim 1, wherein the removing of at least part of the surface is effected by grinding, milling and/or turning.

4. Method according to at least one of the preceding claims, wherein the proportion of the platelet-shaped filler particles (12) locally oriented perpendicularly to the plate plane is at least 10%, preferably at least 50%, particularly preferably at least 75% of the total amount of the filler particles (12) .

5. Method according to at least one of the preceding claims, wherein the polymer is selected from the group consisting of polypropylene, polyethylene, polyurethane, polycarbonate, polyester, polyphenylene sulfide, polyether ether ketone, and polyamide.

6. Plate-shaped moulded plastics part (11), obtained by a method according to Claim 1, comprising a polymer and thermally conductive filler particles (12), wherein the thermally conductive filler particles, in particular platelet-shaped or fibre-shaped filler particles, are locally oriented perpendicularly to a plate plane which is parallel to a direction of flow (4) of the mixture composed of a polymer and thermally conductive filler particles, and wherein the filler particles are composed of an electrically non-conductive compound selected from the group consisting of talc, glass fibres, boron nitride, aluminium nitride, aluminium oxide, magnetite, kaolinite, feldspar, aluminosilicates and beryllium oxide.

7. Moulded plastics part (11) according to Claim 6, wherein the proportion of the platelet-shaped filler particles (12) locally oriented perpendicularly to the plate plane is at least 10%, preferably at least 50%, particularly preferably at least 75% of the total amount of the filler particles (12).

8. Moulded plastics part (11) according to either of Claims 6 and 7, wherein the plate-shaped moulded part (119 is a housing or a heat sink.

## Revendications

1. Procédé de fabrication de pièces moulées en matière plastique en forme de plaques (11) présentant une conductivité thermique élevée, comprenant :
b) le façonnage d'une pièce moulée (11) par moulage par injection d'un mélange d'un polymère et de particules de charges thermoconductrices (12) ;
pendant le façonnage par moulage par injection, grâce à la géométrie de surface de l'outil de moulage par injection, les particules de charges thermoconductrices étant orientées localement perpendiculairement à un plan de plaque parallèle à une direction d'écoulement (4) du mélange d'un polymère et de particules de charges thermoconductrices, la géométrie de surface de l'outil de moulage par injection comprenant des éléments fonctionnels,
et le procédé comprenant une étape supplémentaire :
b) l'élimination d'au moins une partie de la surface de la pièce moulée par usinage mécanique, les particules de charges étant constituées d'un composé électriquement non conducteur, choisi dans le groupe constitué du talc, des fibres de verre, du nitrure de bore, du nitrure d'aluminium, de l'oxyde d'aluminium, de la magnétite, de la kaolinite, du feldspath, des alumosilicates et de l'oxyde de béryllium.

2. Procédé selon la revendication 1, dans lequel les éléments fonctionnels sont appliqués sur une partie ou sur l'ensemble de la surface sur au moins un côté de l'outil de moulage par injection.

3. Procédé selon la revendication 1, dans lequel l'élimination d'au moins une partie de la surface a lieu par ponçage, fraisage et/ou tournage.

4. Procédé selon au moins l'une quelconque des revendications précédentes, dans lequel la proportion des particules de charges en forme de plaquettes (12) qui sont orientées localement perpendiculairement au plan de plaque est d'au moins 10 %, de préférence d'au moins 50 %, de manière particulièrement préférée d'au moins 75 %, de la quantité totale des particules de charges (12).

5. Procédé selon au moins l'une quelconque des revendications précédentes, dans lequel le polymère est choisi dans le groupe constitué du polypropylène, du polyéthylène, du polyuréthane, du polycarbonate, du polyester, du polysulfure de phénylène, de la polyéther-éther-cétone et du polyamide.

6. Pièce moulée en matière plastique en forme de plaque (11), obtenue par un procédé selon la revendication 1, comprenant un polymère et des particules de charges thermoconductrices (12), les particules de charges thermoconductrices, notamment en forme de plaquettes ou en forme de fibres, étant orientées localement perpendiculairement à un plan de plaque parallèle à une direction d'écoulement (4) du mélange d'un polymère et de particules de charges thermoconductrices, et les particules de charges étant constituées d'un composé électriquement non conducteur, choisi dans le groupe constitué du talc, des fibres de verre, du nitrure de bore, du nitrure d'aluminium, de l'oxyde d'aluminium, de la magnétite, de la kaolinite, du feldspath, des alumosilicates et de l'oxyde de béryllium.

7. Pièce moulée en matière plastique (11) selon la revendication 6, dans laquelle la proportion des particules de charges en forme de plaquettes (12) qui sont orientées localement perpendiculairement au plan de plaque est d'au moins 10 %, de préférence d'au moins 50 %, de manière particulièrement préférée d'au moins 75 %, de la quantité totale des particules de charges (12) .

8. Pièce moulée en matière plastique (11) selon l'une quelconque des revendications 6 et 7, dans laquelle la pièce moulée en forme de plaque (119 est un boîtier ou un corps réfrigérant.
